# EUROPÄISCHE PATENTSCHRIFT

(11) **EP 2 070 786 B1**
(45) Veröffentlichungstag und Bekanntmachung des Hinweises auf die Patenterteilung: **17.01.2018**
(21) Anmeldenummer: 09090005.1
(22) Anmeldetag: 26.07.2007
(51) Int. Cl.: B60T 13/66, B60T 17/22, B60T 7/08

(54) **Führerbremsgerät für Zugbremssteuerungssystem mit verbesserter Schnellbremssteuerung**
Drivers braking control device for a train brake control system having an improved quick braking control function
Dispositif pour un conducteur de train d'asservissement rapide amélioré de la système de d'asservissement de freinage

(30) Priorität: 28.07.2006 DE 102006035686; 06.09.2006 DE 102006042418
(43) Veröffentlichungstag der Anmeldung: 17.06.2009
(62) Teilanmeldung aus: 07786447.8
(73) Patentinhaber: Bombardier Transportation GmbH, 10785 Berlin (DE)
(72) Erfinder: Allmeroth, Klaus, 34127 Kassel (DE); Deist, Lothar, 36211 Alheim-Obergude (DE); Prinz, Günther, 69469 Weinheim (DE); Karl, Jürgen, 68305 Mannheim (DE); Krönke, Marko, 34128 Kassel (DE)
(74) Vertreter: Patentanwälte Bressel und Partner mbB

(56) Entgegenhaltungen:
- EP-A- 0 088 242
- EP-A- 0 152 958
- GB-A- 1 508 303

## Beschreibung

Die Erfindung betrifft ein Führerbremsgerät laut Oberbegriff des Anspruchs 1. Ein aus mehreren miteinander gekuppelten Schienenfahrzeugen bestehender Verband wird als Zug als bezeichnet. Die einzelnen Schienenfahrzeuge werden als Einheiten oder Zugeinheiten bezeichnet. Um eine angemessene Brems- oder Verzögerungswirkung bei einem Zug mit mehreren Einheiten zu erreichen, ist es notwendig, dass jede der Einheiten über eigene Bremsmittel zur Bremswirkung bzw. Verzögerungswirkung des Zuges beiträgt. Zur Übermittlung der Bremswirkungsanforderung wird beim Kuppeln der einzelnen Zugeinheiten eine Hauptluftleitung gekuppelt, die sich durch den gesamten Zug erstreckt. Die Hauptluftleitung ist so ausgebildet, dass in ihr ein pneumatischer Druck eingesteuert werden kann, der ein Maß für die Bremswirkungsanforderung einer Zugbremssteuerung ist.

Die Bremsmittel der einzelnen Zugeinheiten umfassen Bremseinheiten, die so ausgebildet sind, dass sie eine maximale Bremswirkung zur Verfügung stellen, wenn die Hauptluftleitung drucklos, d.h. entlüftet ist. Bei den UIC-Zugsystemen ist vorgesehen, dass ein Lösen der Bremsen, d.h. eine Verringerung der Bremswirkung, erst oberhalb von einem Überdruck von 3,4 bar in der Hauptluftleitung einsetzt. Bei einem Betriebsdruck von 5 bar sind die Bremsen dann vollständig gelöst. Die einzelnen Bremseinheiten besitzen in der Regel ein Steuerventil, welches entsprechend des Hauptluftleitungsdrucks einen Bremszylinderdruck aufbaut. Die einzelnen Bremseinheiten der Zugeinheiten umfassen in der Regel pneumatische Reibungsbremsen oder elektropneumatische Reibungsbremsen, können jedoch auch elektromagnetisch wirkende Bremsen, beispielsweise Wirbelstrombremsen usw., umfassen. Die einzelnen Zugeinheiten stellen jedoch sicher, dass eine Bremswirkung entsprechend der Bremsanforderung über die Hauptluftleitung zur Verfügung gestellt wird.

Um eine Schnellbremsung des Zuges zu bewirken, ist es erforderlich, den Druck in der Hauptluftleitung möglichst schnell unter den Druck von etwa 3,4 bar abzusenken, bei dem eine maximale Bremswirkung von den einzelnen Zugeinheiten zur Verfügung gestellt wird. Um einen schnellen Druckabfall unterhalb von diesem Wert im gesamten Zug zu erreichen, ist es daher üblich, die Hauptluftleitung über mindestens ein Entlüftungsventil mit einem großen Querschnitt, der im Regelfall dem Nennquerschnitt der Hauptluftleitung entspricht, zu entlüften.

Eine Schnellbremsung oder auch eine Not- und Zwangsbremsung (die ebenfalls Schnellbremsungen sind) können auf unterschiedliche Weise in einem Zug eingeleitet bzw. angefordert werden. Der am häufigsten eintretende Fall ist jener, bei dem der Zugführer über einen Steller, der historisch als Führerbremsventil bezeichnet wird, eine Schnellbremsung anfordert. Im Stand der Technik ist mit dem Führerbremsventil mechanisch ein Entlüftungsventil gekoppelt, das bei einem Bewegen eines Hebels des Führerbremsventils in eine Schnellbremsstellung in eine geöffnete Stellung übergeht und über einen großen Querschnitt die Hauptluftleitung entlüftet, mit der es pneumatisch verbunden ist. Im Folgenden wird statt des Begriffs Führerbremsventil der Begriff Führerbremsgerät verwendet.

Mit der Hauptluftleitung sind jedoch eine Reihe weiterer pneumatischer Entlüftungsventile verbunden, die jeweils von unterschiedlichen Sicherheits- und Sicherungsvorrichtungen gesteuert oder betätigt werden. So verfügen beispielsweise die einzelnen Zugeinheiten häufig über so genannte Notbremsvorrichtungen, die ein Betätigungselement, welches klassisch als Griff ausgebildet war oder ist, umfassen, über das mechanisch ein mit der Hauptluftleitung verbundenes Entlüftungsventil betätigbar ist. Ein Betätigen dieses Betätigungselements führt dazu, dass die Hauptluftleitung in der entsprechenden Zugeinheit über das zugehörige Entlüftungsventil entlüftet wird und so im gesamten Zug eine Schnellbremsung eingeleitet wird. Zusätzlich sind weitere Sicherheits- und Sicherungsvorrichtungen in der Regel in der als Lokomotive ausgebildeten Zugeinheit vorgesehen, die selbsttätig oder automatisch eine Schnellbremsung anfordern und einleiten können. Hierzu gehören u.a. eine automatische Zugsicherungseinrichtung (ATP - Automatic Train Protection), welche die Informationen von Signalen entlang des Schienenweges auswertet und beispielsweise beim Überfahren eines Haltesignals automatisch eine Schnellbremsung des Zuges einleitet. Eine weitere Sicherheits- und Sicherungsvorrichtung, welche in der Regel in einem Fahrzeugrechner der Lokomotive integriert ist, ist die so genannte Sicherheitsfahrschaltung, auch Totmannschaltung genannt, die eine periodische Betätigung von Stellgliedern durch den Zugführer überwacht und beim Ausbleiben solcher Stellgliederbetätigungen nach einer vorgegebenen Zeitdauer ebenfalls automatisch eine Schnellbremsung einleitet. Darüber hinaus gibt es eine Vielzahl von Sicherheits- und Sicherungsvorrichtungen, die mit bestimmten Sicherungssystemen einzelner miteinander verbundener Schienennetze korrespondieren. Dies bedeutet, dass eine als Lokomotive ausgebildete Zugeinheit in der Regel eine Vielzahl unterschiedlicher Sicherungs- und Sicherheitsvorrichtungen umfassen muss, um eine Zulassung für mehrere miteinander verbundene Schienennetze zu erlangen, die unterschiedliche Sicherheitssysteme verwenden. Hierdurch ist es erforderlich, eine Vielzahl von pneumatischen Entlüftungsventilen und Steuerungseinheiten, die diese Entlüftungsventile betätigen können, in der Lokomotive vorzusehen.

Ein konstruktiver und fertigungstechnischer Aufwand für ein Zugbremssteuerungssystem mit einer Schnellbremssteuerung ist daher sehr hoch, wenn die Zugeinheit, in der Regel eine Lokomotive, in der dieses Zugbremssteuerungssystem integriert ist, eine Zulassung für verschiedene Schienennetze unterschiedlicher Staaten erhalten soll, die unterschiedliche gesetzliche Vorgaben und unterschiedliche technische Sicherungssysteme in ihren Schienennetzen verwenden, die miteinander zu einem Gesamtschienennetz verbunden sind.

Aus der EP 0088242 A1 ist eine Führerbremsanlage für ein Schienenfahrzeug bekannt. Diese umfasst eine elektropneumatische Bremsanlage. In jedem Führerstand sind ein Führerventil-Steuerteil für den Normalfahrbetrieb und ein Führerventil für den Rangierbetrieb und in einem Arbeitsteil je ein elektropneumatisches Abschluss-, Löse- und Bremsventil vorgesehen. Das Führerventil-Steuerteil weist jeweils ein pneumatisches Löse- und Bremsventil auf und einen pneumatischen Umschalter. Der pneumatische Umschalter verbindet die Bremsanlage im Normalbetrieb mit dem elektropneumatischen Abschluss-, Löse- und Bremsventilen und im Notfahrbetrieb mit dem pneumatischen Löse- und Bremsventilen des Führerventil-Steuerteils. Das Führerventil-Steuerteil ist somit als elektrischer und pneumatischer Steller zugleich ausgebildet. Das Führerventil-Steuerteil kann somit als elektromechanisch-pneumatischmechanischer Steller bezeichnet werden.

Aus der GB 1508303 A ist ein Führerbremsventil bekannt, welches eine Mehrzahl von Reedkontakte aufweist. Über einen drehbar gelagerten Hebel kann jeweils einer der Reedkontakte geschlossen werden. Über eine Diodenmatrix werden die Schaltsignale der einzelnen Reedkontakte in ein 3-Bit-Signal umgeformt, dieses "3 Bit"-Signal wird verwendet, um 3 Thyristoren anzusteuern, die wiederum 3 Relays ansteuern. Hierdurch wird für eine Zugbremssteuerung ein für Lastschaltungen geeignetes 3-Bit-Steuersignal bereitgestellt. Zur Redundanzabsicherung einer Schnellbremsung ist eine mechanische Kopplung des Hebels mit einem pneumatischen Ventil vorgeschlagen.

Aus der EP 0152958 A2 ist ein Führerbremsventil für Vollbahn-Streckenlokomotiven mit selbststätigen, indirekt wirkenden Druckluftbremsen beschrieben, welches Eingangssignale aus Eingabeeinrichtungen erhält, die als rein elektrische Signale vorliegen. Diese Signale werden in einer Regelelektronik zu einem Sollwertsignal eines Vorsteuerdrucks (A-Drucks) aufbereitet. In einem Analogwandler wird dieses Signal in den pneumatischen A-Druck umgesetzt, der als Vorsteuerdruck für ein herkömmliches Relayventil dient.

Aufgabe der Erfindung ist es daher, ein Zugbremssteuerungssystem mit verbesserter Schnellbremssteuerung, insbesondere ein verbessertes Führerbremsgerät für eine solche Zugbremssteuerung zu schaffen, mit denen der konstruktive Aufwand und ein Fertigungsaufwand verringert werden, ohne eine Einbuße bei der Systemzuverlässigkeit und Sicherheit zu bewirken.

Die technische Aufgabe wird erfindungsgemäß durch ein Führerbremsgerät mit den Merkmalen des Patentanspruchs 1 gelöst. Weitere vorteilhafte Ausgestaltungen der Erfindung ergeben sich aus den Unteransprüchen.

Der Erfindung liegt der Gedanke zugrunde, ein Zugbremssteuerungssystem zu schaffen, welches mindestens zwei getrennt voneinander ausgebildete Bremswirkgruppen umfasst, die jeweils ein nach einem Ruhestromprinzip wirkendes, mit der Hauptluftleitung verbundenes elektropneumatisches Entlüftungsventil umfassen. Diese mindestens zwei Bremswirkgruppen werden jeweils über eine eigene elektrische Schnellbremsleitung angesteuert. Die elektropneumatischen Entlüftungsventile, die nach dem Ruhestromprinzip wirken, sind so ausgestaltet, dass sie bei einer Unterbrechung der mit der entsprechenden Bremswirkgruppe verbundenen Schnellbremsleitung in eine geöffnete Entlüftungsstellung übergehen. Die Entlüftungsventile weisen einen großen Querschnitt auf, der vorzugsweise dem Nenndurchmesser der Hauptluftleitung entspricht. Allgemein wird für die Hauptluftleitungen ein Durchmesser von 25 mm (DN 25) verwendet. Ein den gegenwärtigen Sicherheitsanforderungen entsprechendes Zugbremssteuerungssystem erhält man, indem man in den Schnellbremsleitungen elektrische Schaltkontakte vorsieht, die bei einer Schnellbremsanforderung jeweils alle geöffnet werden. Somit wird ein Zugbremssteuerungssystem, welches die Einleitung einer Schnellbremsung durch den Zugführer ermöglichen soll, ein Führerbremsgerät umfassen, welches als elektromechanischer Steller ausgebildet ist und mindestens zwei voneinander getrennt ausgebildete elektrische Schaltkontakte umfasst, die mit dem Hebel in der Weise gekoppelt sind, dass die mindestens zwei elektrische Schaltkontakte beim Bewegen des Hebels in die Schnellbremsstellung geöffnet werden, so dass mindestens zwei getrennt ausgebildete elektrische Schnellbremsleitungen, die jeweils einen der mindestens zwei Schaltkontakte umfassen und jeweils mit einer von mindestens zwei Bremswirkgruppen verbunden sind, unterbrochen werden. Bei einer solchen Ausführungsform des Zugbremssteuerungssystems wird die Ausbildung des Führerbremsgeräts stark vereinfacht. Eine direkte mechanische Kopplung des Hebels des Führerbremsgeräts mit einem pneumatischen Entlüftungsventil entfällt. Hierdurch kann das Führerbremsgerät kompakter ausgestaltet werden, was einen Einbau in einen Führertisch einer Lokomotive stark vereinfacht. Die Sicherheit des Zugbremssteuerungssystems wird jedoch gegenüber dem aus dem Stand der Technik bekannten System nicht verringert, da beim Bewegen des Hebels in die Schnellbremsstellung redundant mindestens zwei elektrische Schaltkontakte geöffnet werden, die jeweils eine von mindestens zwei Schnellbremsleitungen unterbrechen, was wiederum dazu führt, dass die Stromversorgung für mindestens zwei redundant ausgeführte Bremswirkgruppen unterbrochen wird, die jeweils ein nach dem Ruhestromprinzip wirkendes Entlüftungsventil aufweisen, welche somit ebenfalls redundant für eine Entlüftung der Hauptluftleitung sorgen. Da diese Entlüftungsventile vorzugsweise mit einem großen Querschnitt ausgebildet sind, führt ein Entlüften über eine der Bremswirkgruppen zu einem schnellen Druckabfall in der Hauptluftleitung und somit zu einer Anforderung einer maximalen Bremswirkung in allen Einheiten des Zuges. Die Tatsache, dass keine mechanische Kopplung des Hebels des Führerbremsgeräts mit einem pneumatischen Entlüftungsventil vorliegt, ist ursächlich dafür, dass der Begriff Führerbremsgerät anstelle des historisch eingeführten Begriffs Führerbremsventil verwendet wird. Ansonsten könnte auch der historisch eingeführte Begriff verwendet werden. Jede der mindestens zwei Bremswirkgruppen ist mit einer eigenen der mindestens zwei Schnellbremsleitungen verbunden. Jede der mindestens zwei Schnellbremsleitungen umfasst einen eigenen der mindestens zwei Schaltkontakt, der beim Bewegen des Führerbremshebels geöffnet wird und die entsprechende Schnellbremsleitung unterbricht und so über die von dieser entsprechenden Schnellbremsleitung angesteuerte Bremswirkgruppe die Hauptluftleitung entlüftet, da das elektropneumatische Entlüftungsventil der entsprechenden Bremswirkgruppe, das nach dem Ruhestromprinzip wirkt, so ausgestaltet ist, dass es bei einer Unterbrechung der mit der entsprechenden Bremswirkgruppe verbundenen Schnellbremsleitung in eine geöffnete Entlüftungsstellung übergeht.

Die mindestens zwei Schaltkontakte sind bei einer bevorzugten Ausführungsform als zwangsöffnende, verschweißungssichere Schaltkontakte ausgebildet. Hierdurch wird sichergestellt, dass eine Betätigung des Führerbremsgeräts immer sicher zu einer Unterbrechung der mindestens zwei elektrischen Schnellbremsleitungen und somit zu einem Aktivieren der Entlüftungsventile der mindestens zwei getrennt ausgebildeten Bremswirkgruppen führt.

Das Vorsehen von mindestens zwei Bremswirkgruppen, die jeweils ein nach dem Ruhestromprinzip bewirkendes pneumatisches Entlüftungsventil umfassen, ermöglicht es, weitere Sicherungs-/Steuerungseinrichtungen so in das Zugbremssteuerungssystem zu integrieren, dass keine zusätzlichen pneumatischen Entlüftungsventile notwendig sind. Vielmehr ist es möglich vorzusehen, dass weitere Schnellbremsleitungsschaltkontakte in den mindestens zwei getrennt ausgebildeten elektrischen Schnellbremsleitungen vorgesehen sind, die jeweils von den Sicherungs-/Steuerungseinrichtungen paarweise offenbar sind. Paarweise bedeutet in diesem Zusammenhang, dass jeweils ein Schnellbremsleitungsschaltkontakt in jeder der mindestens zwei elektrischen Schnellbremsleitungen von einer Sicherungs-/Steuerungseinrichtung geöffnet wird. Sind mehr als zwei Schnellbremsleitungen vorhanden, so ist paarweise in dieser Beschreibung im Sinne von gruppenweise zu verstehen. D. h. in jeder Schnellbremsleitung wird jeweils ein Schnellbremsleitungsschaltkontakt von einer Sicherungs-/Steuereinrichtung geöffnet. Eine bevorzugte Ausführungsform der Erfindung sieht somit vor, dass die mindestens zwei elektrischen Schnellbremsleitungen paarweise jeweils einen oder mehrere elektrische Schnellbremsleitungsschaltkontakte umfassen, die jeweils paarweise mit einer Sicherungs-/Steuerungseinrichtung oder einer von mehreren Sicherungs-/Steuerungseinrichtungen wirkungstechnisch gekoppelt sind, so dass paarweise ein Öffnen des einen oder eines der mehreren der Schnellbremsleitungsschaltkontakte jeweils in den entsprechenden elektrischen Schnellbremsleitungen bewirkbar ist, so dass redundant eine Schnellbremsung anforderbar ist. Hierdurch lässt sich eine erhebliche konstruktive und fertigungstechnische Vereinfachung erreichen. Für jede Sicherungseinrichtung ist es nur noch notwendig vorzusehen, dass von ihr jeweils ein elektrischer Schnellbremsleitungsschaltkontakt in jeder der mindestens zwei Schnellbremsleitungen geöffnet wird. Die Reihenschaltung jeweils eines der mindestens zwei Schaltkontakte und eines oder mehrerer der Schnellbremsleitungsschaltkontakte in jeder der Schnellbremsleitungen führt dazu, dass eine Unterbrechung der elektrischen Schnellbremsleitung herbeigeführt wird, wenn nur einer dieser Schaltkontakte/Schnellbremsleitungsschaltkontakte geöffnet wird. Für jede Sicherungs-/Steuerungseinrichtung wird somit eine Redundanz erreicht, indem ein Schnellbremsleitungsschaltkontakt in jeder der mindestens zwei Schnellbremsleitungen geöffnet wird. Hinsichtlich der unterschiedlichen Sicherungs-/ Steuerungseinrichtungen wird eine Redundanz dadurch erreicht, dass es in jeder der mindestens zwei elektrischen Schnellbremsleitungen ausreicht, dass einer der Schaltkontakte und Schnellbremsleitungsschaltkontakte geöffnet wird. Ist einer der in Reihe geschalteten Schaltkontakte und Schnellbremsleitungsschaltkontakte geöffnet, so wird das nach dem Ruhestromprinzip wirkende Entlüftungsventil der entsprechenden Bremswirkgruppe in eine geöffnete Stellung bewegt, so dass die Hauptluftleitung entlüftet wird und somit eine Schnellbremsung angefordert wird.

Bei einer bevorzugten Ausführungsform des neuartigen Zugbremssteuerungssystems ist vorgesehen, dass die Sicherungs-/ Steuerungseinrichtung oder die mehreren Sicherungs-/Steuerungseinrichtungen einen Fahrzeugrechner umfassen. Der Fahrzeugrechner kann beispielsweise so ausgestaltet sein, dass er ein Modul Sicherheitsfahrschaltung (Totmannschaltung) umfasst. Ferner kann der Fahrzeugrechner andere Komponenten überwachen. Beispielsweise kann der Fahrzeugrechner mit Sensoren gekoppelt sein, die nicht gelöste pneumatische Reibungsbremsen oder nicht gelöste Parkbremsen anzeigen. Liegt ein solcher Fahrzustand vor, so ist eine Schnellbremsung ebenfalls erforderlich, die in einem solchen Fall über den Fahrzeugrechner auslösbar ist. Über den Fahrzeugrechner ist es zusätzlich beispielsweise möglich, in einem Prüflauf die paarweise ausgebildeten Schnellbremsleitungsschaltkontakte einzeln zu öffnen, um so eine Wirksamkeit der mindestens zwei Bremswirkgruppen getrennt überprüfen zu können. Eine Entlüftung der Hauptluftleitung muss eintreten, wenn der Schnellbremsleitungsschaltkontakt in einer der mindestens zwei elektrischen Schnellbremsleitungen geöffnet ist.

Bei einer anderen vorteilhaften Ausführungsform des neuartigen Zugbremssteuerungssystems ist vorgesehen, dass die Sicherungs-/Steuerungseinrichtung oder die mehreren Sicherungs-/Steuerungseinrichtungen eine automatische Zugsicherungseinrichtung (ATP) umfassen, die getrennt von dem Fahrzeugrechner ausgebildet ist. Eine automatische Zugsicherungseinrichtung wirkt mit den an einer Schienenstrecke angeordneten Sicherungseinrichtungen, wie Signalen, Achszählern usw., zusammen. Wird beispielsweise ein Haltesignal von dem Zug überfahren, so bewirkt die automatische Zugsicherungseinrichtung eine Schnellbremsung, indem die zugehörigen Schnellbremsleitungsschaltkontakte in den mindestens zwei elektrischen Schnellbremsleitungen geöffnet werden, so dass redundant über die mindestens zwei Bremswirkgruppen eine Schnellbremsung über ein redundantes Entlüften der Hauptluftleitung angefordert wird. Eine besonders hohe Sicherheit erreicht man, indem sowohl der Fahrzeugrechner als auch die automatische Zugsicherungseinrichtung jeweils getrennt ausgebildete elektrische Schnellbremsleitungsschaltkontakte in den mindestens zwei elektrischen Schnellbremsleitungen betätigen können. Bei weiteren Fortbildungen können zusätzliche Sicherungs-/Steuerungseinrichtungen vorgesehen sein, die getrennt von dem Fahrzeugrechner und der automatischen Zugsteuerungseinrichtung ausgebildet sind und eine Schnellbremswirkung anfordern können.

Eine starke konstruktive Vereinfachung ebenso wie eine einbautechnische Verbesserung erreicht man bei einer Ausführungsform, bei der das Führerbremsgerät in einem Führertisch angeordnet ist und die mindestens zwei Bremswirkgruppen räumlich getrennt von dem Führertisch, vorzugsweise auf einer Gerätetafel in einem Maschinenraum einer als Lokomotive ausgebildeten Einheit des Zuges, angeordnet sind. In den Führertisch müssen so keine pneumatischen Entlüftungsventile der Hauptluftleitung integriert werden, die im Stand der Technik mechanisch mit dem Hebel des Führerbremsgeräts gekoppelt sind. Vielmehr können die Entlüftungsventile im Maschinenraum auf einer Gerätetafel angeordnet werden. Die Verkabelung des Führerbremsgeräts mit den mindestens zwei Bremswirkgruppen erfolgt über die getrennt ausgebildeten elektrischen Schnellbremsleitungen, die vorzugsweise in der Lokomotive so verlegt werden, dass auch bei einer Beschädigung einer der Leitungen ein Kontakt mit einem spannungsführenden Teil ausgeschlossen ist, so dass bei einer Beschädigung der elektrischen Schnellbremsleitung in jedem Fall das Entlüftungsventil der entsprechenden Bremswirkgruppe in den geöffneten Zustand übergeht und eine Entlüftung der Hauptluftleitung bewirkt.

Um eine Schnellbremsung auch im Falle des mechanischen Versagens des Führerbremsgeräts in jedem Falle als Zugführer einleiten zu können, ist bei einer besonders sicheren Ausführungsform vorgesehen, dass auf dem Führertisch ein Notbremsschlagtaster angeordnet ist, der mechanisch mit einem Notbremsentlüftungsventil gekoppelt ist, welches mit der Hauptluftleitung verbunden ist und bei einer Betätigung des Notbremsschlagtasters geöffnet wird und die Hauptluftleitung entlüftet. Bei dieser Ausführungsform ist zwar weiterhin ein pneumatischer Anschluss bzw. eine mechanische Kopplung eines Schlagtasters mit einem pneumatischen Entlüftungsventil, welches mit der Hauptluftleitung verbunden ist, notwendig, jedoch wird hierdurch eine Diversifizierung der Hauptluftleitungsentlüftungssysteme geschaffen. Neben den elektropneumatisch betriebenen Entlüftungsventilen der Bremswirkgruppen ist hier ein rein mechanisch betätigbares pneumatisches Entlüftungsventil vorgesehen. Bei einer Weiterbildung kann jedoch auch vorgesehen sein, dass der Notbremsschlagtaster so ausgebildet ist, dass über ihn ebenfalls Schnellbremsleitungsschaltkontakte in den mindestens zwei elektrischen Schnellbremsleitungen geöffnet werden. Bei einer solchen Ausführungsform kann dann eine mechanische Kopplung an ein Entlüftungsventil der Hauptluftleitung vollständig entfallen. Dennoch bietet eine solche Ausführungsform eine Sicherheit gegenüber einem mechanischen Versagen des Führerbremsgeräts, da ein zweites mechanisches Stellglied zum Einleiten einer Schnellbremsung vorhanden ist.

Ein erfindungsgemäßes Führerbremsgerät ist somit als elektromechanischer Steller ausgebildet und umfasst mindestens zwei voneinander getrennt ausgebildete elektrische Schaltkontakte, die mit dem Hebel des Führerbremsgeräts in der Weise gekoppelt sind, dass die mindestens zwei elektrischen Schaltkontakte bei Bewegen des Hebels in eine Schnellbremsstellung geöffnet werden, wobei der Hebel in mehrere Steuerstellungen, die die Schnellbremsstellung umfassen, mechanisch bewegbar ist und wobei ein Bewegen des Hebels in die Schnellbremsstellung eine Entlüftung der Hauptluftleitung bewirkt, um eine Schnellbremswirkung anzufordern.

Eine besonders bevorzugte Weiterbildung der Erfindung sieht vor, dass das Führerbremsgerät einen weiteren oder mehrere weitere Schaltkontakte umfasst, der seinen oder die ihren Schaltzustand beim Bewegen des Hebels in die Schnellbremsstellung ändern, wobei der weitere Schaltkontakt oder die mehreren weiteren Schaltkontakte jeweils in einer Signalleitung oder einer Betriebsspannungsleitung angeordnet sind oder anordenbar sind, um beim Bewegen des Hebels in die Schnellbremsstellung eine Schnellbremsung zu signalisieren oder signalisieren zu können. Hierdurch ist es möglich, getrennt ausgebildete weitere Signalleitungen und Betriebsspannungsleitungen vorzusehen, die das Einleiten einer Schnellbremsung über das Führerbremsgerät anderen Komponenten signalisieren. Vorzugsweise ist der Fahrzeugrechner über eine oder zwei getrennt ausgebildete Signalleitungen in dieser Weise mit dem Führerbremsgerät verbunden. Somit kann bei einer bevorzugten Ausführungsform erreicht werden, dass der Fahrzeugrechner mit mindestens einer der Signalleitungen oder der Betriebsspannungsleitungen verbunden ist, in denen der weitere Schaltkontakt oder einer der mehreren weiteren Schaltkontakte angeordnet ist. Bei einer noch bevorzugteren Ausführungsform ist zusätzlich vorgesehen, dass der Fahrzeugrechner die Schnellbremsleitungsschaltkontakte, mit denen er wirkungstechnisch gekoppelt ist, öffnet, sobald ein Einleiten einer Schnellbremsung, beispielsweise mittels des Führerbremsgeräts, erkannt ist. Hierdurch wird zum einen die Redundanz und damit die Sicherheit beim Unterbrechen der Schnellbremsleitungen erhöht. Ferner kann in langen Zügen die Einleitung einer Notbremsung, die zusätzlich zu einem Entlüften der Hauptluftleitung in der entsprechenden Einheit des Zuges, in dem die Notbremsung ausgelöst wird, auch elektronisch oder elektrisch zu der Lokomotive übertragen wird, nahezu zeitgleich mit dem Auslösen die Schnellbremsung in der Lokomotive bewirken, indem eine Entlüftung der Hauptluftleitung zusätzlich über die Entlüftungsventile der mindestens zwei Bremswirkgruppen aktiviert wird. Hierdurch wird ein schnellerer Druckabfall in der Hauptluftleitung erreicht, so dass ein Einsetzen der maximalen Bremswirkung schneller erreicht wird, was wiederum zu einer Verringerung der Verzögerungsstrecke führt, die der Zug zurücklegt, bis er zum Stillstand kommt.

Weitere vorteilhafte Merkmale des erfindungsgemäßen Gegenstandes ergeben sich aus der nachfolgenden Beschreibung einer bevorzugten Ausführungsform eines Zugbremssteuersystems und eines entsprechenden Führerbremsgeräts. Hierbei wird auf folgende Zeichnungen Bezug genommen:
- Fig. 1: eine schematische Darstellung eines Zuges; und
- Fig. 2: eine schematische Darstellung eines Zugbremssteuerungssystems.

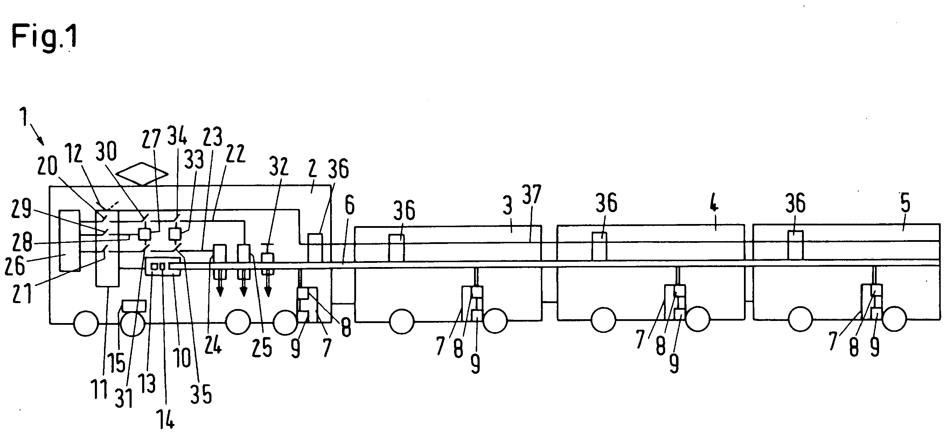

In Fig. 1 ist ein Zug 1 dargestellt. Der Zug umfasst mehrere Einheiten 2-5, von denen die Zugeinheit 2 als Lokomotive ausgebildet ist. Die Zugeinheiten 2-5 sind in der Weise aneinander gekuppelt, dass eine Hauptluftleitung 6 sich durch den gesamten Zug erstreckt. In den den Zug 1 begrenzenden Zugeinheiten 2 und 5 ist die Hauptluftleitung 6 abgeschlossen, so dass in der Hauptluftleitung 6 ein pneumatischer Druck aufgebaut werden kann. Die Zugeinheiten 2-5 umfassen jeweils eine Bremseinheit 7, die als pneumatisch gesteuerte Bremse ausgebildet ist. Die Bremseinheiten 7 sind mit der Hauptluftleitung 6 verbunden. Ein Steuerventil 8 setzt einen pneumatischen Druck in der Hauptluftleitung 6 in einen Druck eines entsprechenden Bremszylinders 9 um. Die Bremseinheiten 7 sind so ausgestaltet, dass der Bremszylinderdruck in den Bremszylindern 9 maximal ist, wenn der pneumatische Druck in der Hauptluftleitung kleiner als 3,4 bar ist. Steigt der pneumatische Druck in der Hauptluftleitung über 3,4 bar, so bewirken die Steuerventile 8 der Bremseinheiten 7, dass der Druck in den Bremszylindern 9 sinkt. Bei einem Betriebsdruck von 5 bar sind die pneumatischen Reibungsbremsen vollständig gelöst. Der Druck in der Hauptluftleitung wird über eine Bremsdrucksteuerung 10 in der Lokomotive 2 geregelt. Die Bremsdrucksteuerung ist mit einem Führerbremsgerät 11 verbunden, welches auch als Zugbremshebel bezeichnet wird. Über einen Hebel 12 des Führerbremsgeräts 11 kann ein Zugführer die Bremsdrucksteuerung 10 regeln. Die Stellbefehle des Führerbremsgeräts 11 werden zum einen an eine elektronische Regeleinrichtung 13 übermittelt. Zeitgleich werden die Stellbefehle an eine elektropneumatische Druckregeleinheit 14 übermittelt, die eine Regelung des pneumatischen Drucks in der Hauptluftleitung übernimmt, sofern die elektronische Regeleinrichtung 13 ausfällt.

Verfügt eine der Zugeinheiten 2-5, wie in diesem Beispiel die als Lokomotive ausgebildete Zugeinheit 2, neben der pneumatischen Reibungsbremse über eine elektrische Bremse 15, so wird von der Bremseinheit 7 aus dem Hauptluftleitungsdruck ein Sollwert für die elektrische Bremse 15 ermittelt. Solange die elektrische Bremse 15 eine ausreichende Bremswirkung zur Verfügung stellt, wird der vorgeregelte Bremsdruck für den Bremszylinder 9 mittels eines nicht dargestellten elektromagnetischen schaltbaren Rückhalteventils zurückgehalten. Sobald die elektrische Bremse 15 nicht die ausreichende Bremswirkung zur Verfügung stellt oder die elektrische Bremse deaktiviert wird, wird der Bremsdruck auf den Bremszylinder 9 durch ein Aufheben der Rückhaltung freigegeben.

Wird eine Schnellbremsung von dem Zugführer mittels eines Bewegens des Hebels 12 in eine Schnellbremsstellung des Führerbremsgeräts 11 eingeleitet, so werden Schaltkontakte 20 und 21 geöffnet, die mechanisch mit dem Hebel gekoppelt sind. Hierdurch werden zwei getrennt ausgebildete elektrische Schnellbremsleitungen 22, 23 unterbrochen. Die Schnellbremsleitungen 22, 23 versorgen zwei getrennt voneinander ausgebildete Bremswirkgruppen 24, 25 mit einer Versorgungsspannung, die aus einer Bordnetzversorgung 26 entnommen ist. In der Regel ist die Bordnetzversorgung 26 als Batterie ausgebildet. Die Bremswirkgruppen 24, 25 umfassen jeweils ein mit der Hauptluftleitung 6 verbundenes elektropneumatisches Entlüftungsventil (nicht dargestellt). Die elektropneumatischen Entlüftungsventile arbeiten nach dem Ruhestromprinzip. Dies bedeutet, dass die elektropneumatischen Entlüftungsventile in einen geöffneten Zustand übergehen, sobald sie nicht mit einem Strom versorgt werden. Ein Unterbrechen der elektrischen Schnellbremsleitungen 22, 23 bewirkt somit, dass die elektropneumatischen Entlüftungsventile der Bremswirkgruppen 24, 25 in eine geöffnete Stellung übergehen und so die Hauptluftleitung 6 redundant entlüften. Die elektropneumatischen Entlüftungsventile sind so ausgestaltet, dass sie im geöffneten Zustand eine Öffnung aufweisen, die dem Nenndurchmesser der Hauptluftleitung entspricht. Dieser Nenndurchmesser beträgt in der Regel 25 mm. Das Entlüften der Hauptluftleitung 6 führt dazu, dass über die Steuerventile 8 der Bremseinheiten 7 der Zugeinheiten 2-5 eine maximale Bremskraft erzeugt wird und hierdurch eine maximale Bremswirkung/Verzögerungswirkung des Zuges 1 bewirkt wird. Bei einer Zugeinheit wie der Lokomotive 2 kann die Bremswirkung, wie oben erläutert, auch durch eine elektrische Bremswirkung alternativ oder zusätzlich zur Verfügung gestellt werden.

Mit der Bordnetzversorgung 26 ist ein Fahrzeugrechner 27 über eine Signalleitung 28 verbunden, die einen weiteren Schaltkontakt 29 umfasst, der Bestandteil des Führerbremsgeräts 11 ist und mit dem Hebel 12 so gekoppelt ist, dass der weitere Schaltkontakt 29 in der Schnellbremsstellung geöffnet wird. Hierüber ist es möglich, dem Fahrzeugrechner 27 eine Schnellbremsung zu signalisieren. Der Fahrzeugrechner 27 ist mit Schnellbremsleitungsschaltkontakten 30, 31 gekoppelt, die mit den Schaltkontakten 20, 21 in den zwei Schnellbremsleitungen 22, 23 jeweils in Reihe angeordnet sind. Über ein Öffnen dieser Schnellbremsleitungsschaltkontakte 30, 31 kann durch den Fahrzeugrechner 27 somit ebenfalls eine Schnellbremsung des Zuges 1 ausgelöst werden, da eine Unterbrechung der Schnellbremsleitungen 22, 23 durch die Schnellbremsleitungsschaltkontakte 30, 31 ebenfalls ein Öffnen der Entlüftungsventile der Bremswirkgruppen 24, 25 bewirken. Der Fahrzeugrechner 27 kann so ausgestaltet sein, dass die Schnellbremsleitungsschaltkontakte 30, 31 geöffnet werden, sobald eine Schnellbremsung über eine Unterbrechung der Signalleitung 28 aufgrund eines Öffnens eines weiteren Schaltkontakts 29 ermittelt wird. Zwar sind die Schaltkontakte 20, 21 als zwangsöffnende und verschweißungssichere Schaltkontakte ausgebildet, dennoch sind sie störungsanfälliger als der weitere Schaltkontakt 29, da über diesen nur ein Signalstrom fließen muss, wohingegen die Schaltkontakte 20, 21 den Betriebsstrom für die elektropneumatischen Entlüftungsventile führen müssen. In dem dargestellten Ausführungsbeispiel sind eine Signalleitung 28 und ein weiterer Schaltkontakt 29 dargestellt. Das Führerbremsgerät 11 kann jedoch mehrere weitere Schaltkontakte und mehrere Signalleitungen und/oder Betriebsstromleitungen umfassen, die ihren Schaltzustand bei einem Bewegen des Hebels 12 in die Schnellbremsstellung ändern. Diese Änderung ist vorzugsweise ein Öffnen des weiteren Schaltkontakts.

Um auch im Falle einer mechanischen Blockade des Hebels 12 des Führerbremsgeräts 11 sicher eine Schnellbremsung in dem Führerstand der als Lokomotive ausgebildeten Zugeinheit 2 auslösen zu können, umfasst die Zugbremssteuerung einen Notbremsschlagtaster 32, der mechanisch mit einem Entlüftungsventil gekoppelt ist, welches wiederum mit der Hauptluftleitung 6 verbunden ist und bei einer Betätigung des Notbremsschlagtasters 32 in eine offene Stellung überführt wird und über einen großen Querschnitt die Hauptluftleitung 6 entlüftet. Beim Betätigen des Notbremsschlagtasters 32 wird zusätzlich ein nicht dargestellter elektrischer Schaltkontakt geöffnet, der zu einer Unterbrechung des Haltestroms der Hauptschalterschleife führt und ein Absenken des Stromabnehmers bei einer elektrisch angetriebenen Lokomotive bewirkt. Bei einer dieselelektrisch angetriebenen Lokomotive kann alternativ beispielsweise das Hauptschütz entregt werden. Ziel dieser Maßnahmen ist es, den Zug von einer externen Spannungsversorgung abzutrennen und eine Traktion dadurch zu vermeiden, dass die Antriebsmaschine gestoppt wird.

Unabhängig von dem Zugführer kann eine Schnellbremsung auch automatisch durch unterschiedliche Systeme eingeleitet werden. Beispielsweise umfasst der bereits beschriebene Fahrzeugrechner 27 in der Regel ein Modul einer Sicherheitsfahrschaltung (Totmannschaltung), mit der überwacht wird, ob der Zugführer den Zug entsprechend der vorgegebenen Richtlinien führt. Hierzu muss der Zugführer in regelmäßigen Abständen Betätigungselemente der Zugsteuerung betätigen. Unterbleibt eine solche Betätigung, so wird nach einer vorgegebenen Zeitspanne eine Schnellbremsung aktiviert. Hierfür öffnet der Fahrzeugrechner 27 die Schnellbremsleitungsschaltkontakte 30, 31 der Schnellbremsleitungen 22, 23, um hierdurch ein Öffnen der Entlüftungsventile der Bremswirkgruppen 24, 25 zu bewirken.

Ein anderes System, welches eine Schnellbremsung automatisch auslösen kann, ist eine automatische Zugsicherungseinrichtung 33, die englisch als Automatic Train Protection (ATP) bezeichnet wird. Die automatische Zugsicherungseinrichtung 33 wirkt mit Zugsicherungselementen zusammen, die entlang des Schienennetzes aufgestellt sind. Die automatische Zugsicherungseinrichtung 33 bewirkt beispielsweise eine Schnellbremsung, wenn ein Haltesignal von dem Zug 1 überfahren wird. Die automatische Zugsicherungseinrichtung 33 ist mit zwei weiteren Schnellbremsleitungsschaltkontakten 34, 35 gekoppelt, die in den Schnellbremsleitungen 22, 23 angeordnet sind. Eine Schnellbremsung des Zuges 1 wird durch die automatische Zugsicherungseinrichtung 33 ausgelöst, indem die weiteren Schnellbremsleitungsschaltkontakte 34, 35 geöffnet werden, wodurch die nach dem Ruhestromprinzip arbeitenden Entlüftungsventile der Bremswirkgruppen 24, 25 in die geöffnete Stellung übergehen und die Hauptluftleitung 6 entlüften.

In den elektrischen Schnellbremsleitungen 22, 23 können noch weitere Schnellbremsleitungsschaltkontakte angeordnet sein. Diese sind vorzugsweise paarweise geordnet. Dies bedeutet, dass jeweils in jeder der beiden elektrischen Schnellbremsleitungen einer der Schnellbremsleitungsschaltkontakte eines Paares angeordnet ist. Eine Sicherungs-/Steuerungseinrichtung, die dafür vorgesehen ist, eine Schnellbremsung auslösen zu können, ist jeweils mit den beiden Schnellbremsleitungsschaltkontakten des Paares verbunden, so dass beide Schnellbremsleitungen unterbrochen werden können, um redundant eine Schnellbremsung anzufordern bzw. einzuleiten.

Eine Schnellbremsung kann darüber hinaus durch Notbremsvorrichtungen 36 ausgelöst werden, die in einer der Zugeinheiten 2 bis 5 angeordnet sind. Die Notbremsvorrichtungen 36 umfassen ein Betätigungselement (nicht dargestellt), welches bei einer Betätigung ein mit der Hauptluftleitung 6 verbundenes Entlüftungsventil (nicht dargestellt) öffnet. In modernen Zugeinheiten sind die Notbremsvorrichtungen 36 so ausgestaltet, dass es sich bei dem Entlüftungsventil um ein elektropneumatisches Ventil handelt. Die Betätigung der Notbremsvorrichtung 36 wird über eine UIC-Leitung 37, die ebenfalls durch den gesamten Zug 1 gekuppelt ist, auch elektrisch signalisiert. Verfügt der Zug über eine so genannte Notbrems-überbrückungsfunktionalität, so kann der Fahrzeugführer mittels des Führerbremsgeräts 11 die in einer der Zugeinheiten 2-5 mittels einer der Notbremsvorrichtungen 36 ausgelöste Schnellbremsung überschreiben, indem der Hebel 12 in eine so genannte Steuerstellung "Füllstoß" bewegt wird. Zum einen wird hierdurch ein großer Querschnitt zwischen einer druckreduzierten Hauptbehälterleitung (nicht dargestellt) und der Hauptluftleitung 6 geöffnet, um einen Druck in der Hauptluftleitung 6 schnell wieder auf den Betriebsdruck anzuheben. Ferner wird das elektropneumatisch ausgebildete Entlüftungsventil der Notbremsvorrichtung 36 wieder geschlossen. Hierfür wird zu der Notbremsvorrichtung 36 ein elektrisches Signal übermittelt.

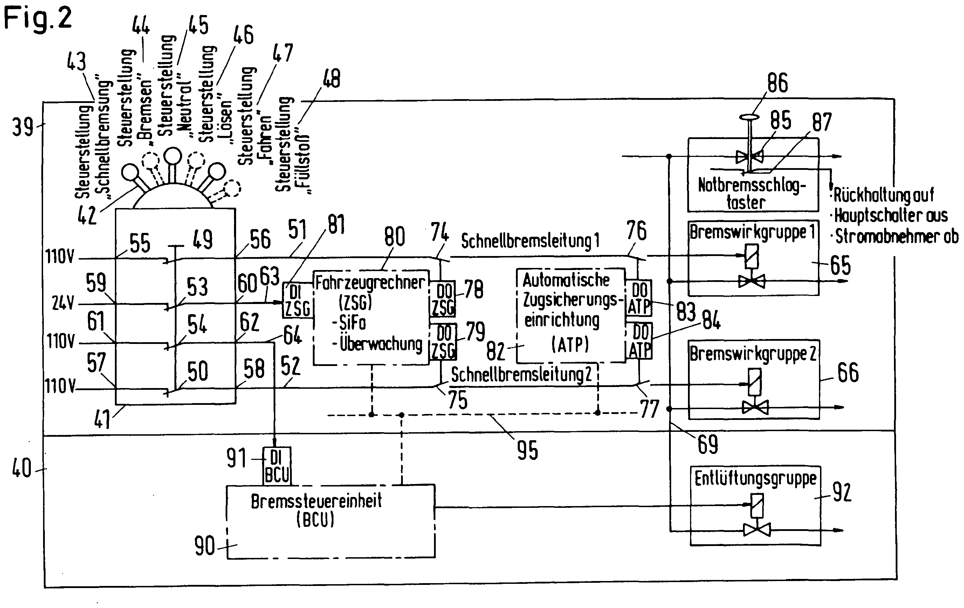

In Fig. 2 ist ein schematisches Prinzipschaltbild von Komponenten einer Zugbremssteuerung dargestellt. In einem oberen Bereich 39 sind die für ein sicheres Einleiten einer Schnell- oder Zwangsbremsung auf einer als Lokomotive ausgebildeten Zugeinheit vorzugsweise vorgesehen Komponenten dargestellt. In einem unteren Bereich 40 sind weitere Komponenten einer Zugbremssteuerung lediglich exemplarisch angedeutet.

Ein Führerbremsgerät 41 umfasst einen Hebel 42, der mechanisch in mehrere Steuerstellungen 43 bis 48 bewegbar ist. In den Steuerstellungen 43, 45, 47, die rastiert sind, ist der Hebel 42 mittels einer durchgezogenen Linie dargestellt, Diese umfassen die Schnellbremsstellung 43 (auch Steuerstellung "Schnellbremsung" genannt), die zusätzlich eine Endanschlagsstellung des Hebels 42 darstellt, die Neutralstellung 45 (Steuerstellung "Neutral") sowie die Fahrstellung 47 (Steuerstellung "Fahren"). Aus der Steuerstellung "Bremsen" 44 und der Steuerstellung "Lösen" 46 kehrt der Hebel 42 federgeführt in die Neutralstellung 45 zurück, sobald dieser in einer dieser Stellungen von dem Zugführer losgelassen wird. Ebenfalls tastend rückfedernd ist die Steuerstellung "Füllstoß" 48 ausgeführt, aus der der Hebel 42 in die Stellung "Fahren" 47 nach dem Loslassen zurückkehrt. Bei einem Bewegen des Hebels 42 in die Steuerstellung "Fahren" 47 wird über eine Bremsdrucksteuerung (nicht dargestellt) ein Vorsteuerdruck (A-Druck), dem der Hauptluftleitungsdruck folgt, auf den Betriebsdruck angehoben. Das Regeln des Vorsteuerdrucks und somit des Drucks in der Hauptluftleitung erfolgt im Normalbetrieb elektronisch. Zusätzlich ist ein elektropneumatisch wirkendes Modul, welches auch als Brems- und Löseeinheit bezeichnet wird, vorgesehen, das bei einem Ausfall der elektronischen Drucksteuerung den Vorsteuerdruck (A-Druck) und somit den Druck in der Hauptluftleitung regelt. Bei elektronischer Regelung beträgt der Betriebsdruck 5 bar und im Ersatzbetrieb 5,4 bar. Bei einem Bewegen des Hebels 42 in die Steuerstellung "Fahren" 47 wird ferner eine Traktionssperre nach zusätzlicher Quittierung mit einem Fahr-/Bremsschalter (nicht dargestellt) aufgehoben. In den Steuerstellungen "Schnellbremsen" 43, "Bremsen" 44, "Neutral" 45 und "Lösen" 46 wirkt jeweils die Traktionssperre.

Wird der Hebel 42 des Führerbremsgeräts 41 in die Steuerstellung "Bremsen" 44 bewegt, so wird der Druck in der Hauptluftleitung in Abhängigkeit von der Verweildauer des Hebels in der tastend ausgebildeten Steuerstellung "Bremsen" 44 abgesenkt. Die Vorsteuerdruck- und Hauptluftleitungsdruckabsenkung in einer ersten Bremsstufe beträgt 0,4 bar + 0,1 bar unter den Regelbetriebsdruck. Eine maximale Vorsteuerdruck/Hauptluftleitungsdruckabsenkung in der Bremsstellung beträgt 1,6 bar + 0,2 bar unter den Regelbetriebsdruck. Bei diesem Hauptluftleitungsdruck von 1,6 bar + 0,2 bar unterhalb des Regelbetriebsdrucks wird eine Vollbremsung angefordert. Wird der Hebel 42 in dieser Steuerstellung "Bremsen" 44 losgelassen, so kehrt der Hebel 42 selbständig in die Steuerstellung "Neutral" 45 zurück. Für eine Überwachung der angeforderten Zugbremskraft steht dem Zugführer eine unmittelbar benachbart zu dem Führerbremsgerät 41 angeordnete Anzeigevorrichtung (nicht dargestellt) zur Verfügung, die den Vorsteuerdruck (A-Druck) und den Hauptluftleitungsdruck (HL-Druck) anzeigt.

Solange sich der Hebel 42 in der Steuerstellung "Neutral" 45 befindet, werden der Vorsteuerdruck (A-Druck) und der Hauptluftleitungsdruck (HL-Druck) nicht verändert und die angeforderte Zugbremskraft konstant gehalten.

Zum Verringern der angeforderten Zugbremskraft wird der Hebel 42 in die Steuerstellung "Lösen" 46 bewegt. Diese Stellung ist erneut tastend rückfedernd in die Steuerstellung "Neutral" 47 ausgebildet. In Abhängigkeit von der Verweildauer des Hebels 42 in der Steuerstellung "Lösen" 46 wird der Vorsteuerdruck (A-Druck) und somit folgend der Hauptluftleitungsdruck (HL-Druck) erhöht. In einer letzten Lösestufe beträgt die Hauptluftleitungsdruckdifferenz zum Regelbetriebsdruck mindestens 0,25 bar. Beim Loslassen des Hebels 42 in der Steuerstellung "Lösen" 46 kehrt der Hebel 42 selbsttätig in die Steuerstellung "Neutral" 45 zurück.

Um eine Schnellbremsung auszulösen, wird der Hebel 42 des Führerbremsgeräts 41 in die Steuerstellung "Schnellbremsung" 43 bewegt. Hierdurch werden mit dem Hebel 42 mechanisch gekoppelte Schaltkontakte 49, 50 geöffnet, die in voneinander getrennt ausgebildeten Schnellbremsleitungen 51, 52 angeordnet sind. Ferner werden beim Bewegen des Hebels 42 in die Steuerstellung "Schnellbremsung" 43 weitere Schaltkontakte 53, 54 geöffnet. Die Schaltkontakte 51, 52 und weiteren Schaltkontakte 53, 54 sind als zwangsgeführte verschweißungssichere Schaltkontakte ausgebildet. Die Schaltkontakte 51, 52 und die weiteren Schaltkontakte 53, 54 weisen jeweils zwei Anschlüsse 55 und 56, 57 und 58, 59 und 60 und 61 und 62 auf. Jeweils einer der Anschlüsse 55, 57, 59, 61 ist mit einer Spannungsversorgung verbunden (nicht dargestellt). Der jeweils andere Anschluss 56, 58 der Schaltkontakte 49, 50 ist mit einer der elektrischen Schnellbremsleitungen 51, 52 verbunden und die anderen Anschlüsse 60, 62 der weiteren Schaltkontakte 53, 54 sind mit Signal-/Betriebsspannungsleitungen 63, 64 verbunden.

Die elektrischen Schnellbremsleitungen 51, 52 sind jeweils mit einer von zwei getrennt ausgebildeten Bremswirkgruppen 65, 66 verbunden. Die Bremswirkgruppen 65, 66 weisen jeweils ein Entlüftungsventil 67, 68 auf, die beide mit einer Hauptluftleitung 69 verbunden sind. Die Entlüftungsventile 67, 68 sind als elektropneumatische Ventile ausgebildet, die nach dem Ruhestromprinzip wirken und in eine geöffnete Stellung übergehen, sofern durch ihre elektromagnetischen Betätigungselemente 70, 71 kein Strom fließt. Die Stromversorgung der elektromagnetischen Betätigungselemente 70, 71 erfolgt über die Schnellbremsleitungen 51, 52. Eine Unterbrechung der Schnellbremsleitungen 51, 52 bewirkt somit, dass die elektromagnetischen Betätigungselemente 70, 71 nicht von einem Strom durchflossen sind und somit die Entlüftungsventile 67, 68 in einen geöffneten Zustand übergehen und die Hauptluftleitung 69 entlüften, wie dies mittels Pfeilen 72, 73 angedeutet ist.

Die elektrischen Schnellbremsleitungen 51, 52 umfassen ferner jeweils in den beiden Schnellbremsleitungen 51, 52 paarweise angeordnete Schnellbremsleitungsschaltkontakte 74, 75 und 76, 77. Die Schnellbremsleitungsschaltkontakte 74, 75 sind jeweils mit einem Steuermodul 78, 79 eines Fahrzeugrechners 80 verbunden. Der Fahrzeugrechner ist somit in der Lage, über die Steuerungsmodule 78, 79 die Schnellbremsleitungsschaltkontakte 74, 75 in den Schnellbremsleitungen 51, 52 zu öffnen und hierdurch eine Entlüftung der Hauptluftleitung über die Bremswirkgruppen 65, 66 zu bewirken. In dem Fahrzeugrechner 80 findet eine Überwachung der Zugeinheit bzw. des Fahrzeugs statt. Ferner ist in dem Fahrzeugrechner 80 ein Modul zum Überwachen der Sicherheitsfahrschaltung, die auch als Totmannschaltung bezeichnet wird, untergebracht. Der Fahrzeugrechner 80 umfasst zusätzlich ein Eingangsmodul 81, das über die Signal-/Betriebsstromleitung 63 mit dem weiteren Schaltkontakt 53 verbunden ist. Über ein Öffnen des weiteren Schaltkontakts 53 wird somit dem Fahrzeugrechner 80 die Einleitung einer Schnellbremsung mittels des Führerbremsgeräts 41 signalisiert. Um diese Schnellbremsung zu unterstützen, kann der Fahrzeugrechner 80 die Schnellbremsleitungsschaltkontakte 74, 75 öffnen. Die Schnellbremsleitungsschaltkontakte 74, 75 können von dem Fahrzeugrechner 80 jedoch auch nach dem Aufrüsten der Lokomotive einzeln geöffnet werden, um eine Wirksamkeit der entsprechenden Bremswirkgruppen 65, 66 prüfen zu können.

Eine automatische Zugsicherungseinrichtung (ATP) 82 umfasst weitere Steuerungsmodule 83, 84, die mit den Schnellbremsleitungsschaltkontakten 76, 77 verbunden sind und diese betätigen können. Die automatische Zusicherungseinrichtung 82 wirkt mit Sicherungselementen und Sicherungsanlagen entlang einer Schienenstrecke zusammen. Über ein Öffnen der Schnellbremsleitungsschaltkontakte 76, 77 wird die automatische Zugsicherungseinrichtung 83 in die Lage versetzt, eine Schnellbremsung über ein Entlüften der Hauptluftleitung 69 über die Bremswirkgruppen 65, 66 redundant einzuleiten.

Zur Erhöhung der Sicherheit ist ein weiteres Entlüftungsventil 85 mit der Hauptluftleitung 69 verbunden. Dieses kann über einen Notbremsschlagtaster 86 geöffnet werden, der mechanisch mit dem weiteren Entlüftungsventil 85 gekuppelt ist. Der Notbremsschlagtaster 86 öffnet fernen einen zusätzlichen elektrischen Schaltkontakt 87. Durch das Öffnen des zusätzlichen Schaltkontaktes 87 werden ein Absenken eines Stromabnehmers bei einer elektrisch betriebenen Lokomotive sowie eine Unterbrechung einer Hauptschalterschleife bewirkt. Zusätzlich zu dem Notbremsschlagtaster 86 kann ein weiterer Schlagtaster vorgesehen sein (nicht dargestellt), der mechanisch nicht dargestellte Schnellbremsleitungsschaltkontakte in den beiden Schnellbremsleitungen 51, 52 öffnet und hierüber eine Notbremsung über die Bremswirkgruppen 65, 66 auslöst.

Über die Signal-/Betriebsstromleitung 64 wird das Einleiten einer Schnellbremsung einer Bremssteuereinheit 90 mit einem Eingangsmodul 91 signalisiert. Die Bremssteuereinheit 90 ist hier stellvertretend für eine Vielzahl weiterer Komponenten der Zugbremssteuerung dargestellt, die jedoch für ein sicheres Einleiten einer Schnell- und/oder Zwangsbremsung nicht erforderlich sind. Das Bremssystem der Lokomotive kann über weitere Entlüftungsgruppen 92 für die Hauptluftleitung 69 verfügen. Der Fahrzeugrechner 80, die automatische Zugsicherungseinrichtung 82 und die Bremssteuereinheit 90 sind über ein Datenbussystem 95 miteinander verbunden. Hierüber können Daten im Betrieb ausgetauscht werden.

Wird eine Notbremsung über eine Notbremsvorrichtung in der Lokomotive oder in einer mit der Lokomotive gekuppelten Zugeinheit ausgelöst, so wird ein elektropneumatisches Entlüftungsventil (nicht dargestellt) geöffnet, um die Hauptluftleitung zu entlüften. Zusätzlich wird ein Notbremssignal über eine UIC-Leitung (nicht dargestellt) in den Führerstand der Lokomotive übermittelt. Der Zugführer hat nun die Möglichkeit, den Hebel 42 des Führerbremsgeräts 41 in die Steuerstellung "Füllstoß" 48 zu bewegen. Hierdurch wird die Notbremsung überbrückt. Über ein elektrisches Signal wird das elektropneumatische Entlüftungsventil der Notbremsvorrichtung geschlossen und gleichzeitig ein großer Querschnitt zwischen der Hauptluftleitung 69 und einer druckreduzierten Hauptbehälterleitung geöffnet, um den Druck in der Hauptluftleitung 69 schnell wieder auf den Regelbetriebsdruck anzuheben. Die Steuerstellung "Füllstoß" 48 kann auch verwendet werden, um die Hauptluftleitung 69 nach dem Kuppeln eines Zuges schnell auf den Regelbetriebsdruck zu bringen.

Die Schnellbremsleitungsschaltkontakte 74-77 sind vorzugsweise als elektromagnetische Schalter ausgeführt, die nach dem Ruhestromprinzip wirken. Dies bedeutet, dass die Schnellbremsleitungsschaltkontakte 74-77 nur in einem geschlossenen, einen elektrischen Kontakt herstellenden Zustand verbleiben, solange sie mit einem Betriebsstrom über die Steuermodule 78, 79, 83, 84 versorgt werden.

Das Bremssystem der Lokomotive ist vorzugsweise so ausgebildet, dass aus dem Hauptluftleitungsdruck ein Bremssollwert ermittelt wird und die Bremswirkung mittels elektrischer Bremsen zur Verfügung gestellt wird. Hierfür wird der vorgesteuerte Bremsdruck für die Bremszylinder der pneumatischen Reibungsbremse über ein Rückhalteventil zurückgehalten. Erst wenn die elektrische Bremse nicht die nötige Verzögerungswirkung aufbringt, wird das Rückhalteventil geöffnet und der Druck in den Bremszylindern gemäß der angeforderten Bremswirkung eingestellt, die aus dem Druck in der Hauptluftleitung abgeleitet ist. In den Hebel 42 des Führerbremsgeräts 41 ist ein Drucktaster (nicht dargestellt) integriert, über den das kombinierte Bremsen mittels der elektrischen Bremse ein- und ausgeschaltet werden kann. Ferner wird die pneumatische Reibungsbremse aktiviert, wenn der Notbremsschlagtaster 86 betätigt wird, da eine Betätigung des Notbremsschlagtasters 86 auch ein Entregen des Rückhalteventils bewirkt.

Beschrieben ist eine Schnellbremssteuerung mit zwei Bremswirkgruppen. Zur Erhöhung der Redundanz können jedoch auch mehr Bremswirkgruppen vorgesehen sein, die jeweils über eine eigene, getrennt ausgebildete Schnellbremsleitung mit eigenen Schaltkontakten und Schnellbremsleitungsschaltkontakten angeschlossen sind.

### Bezugszeichenliste

- 1: Zug
- 2-5: Zugeinheiten
- 6: Hauptluftleitung
- 7: Bremseinheit
- 8: Steuerventil
- 9: Bremszylinder
- 10: Bremsdrucksteuerung
- 11: Führerbremsgerät
- 12: Hebel
- 13: elektrische Druckregeleinheit
- 14: elektropneumatische Druckregeleinheit
- 15: elektrische Bremse
- 20, 21: Schaltkontakt
- 22, 23: Schnellbremsleitung
- 24, 25: Bremswirkgruppe
- 26: Bordnetzversorgung
- 27: Fahrzeugrechner
- 28: Signalleitung
- 29: weiterer Schaltkontakt
- 30, 31: Schnellbremsleitungsschaltkontakt
- 32: Notbremsschlagtaster
- 33: automatische Zugsicherungseinrichtung
- 34, 35: weiterer Schnellbremsleitungsschaltkontakt
- 36: Notbremsvorrichtung
- 37: UIC-Leitung
- 39: oberer Bereich (mit den vorzugsweise vorgesehenen Komponenten zur sicheren Einleitung einer Schnellbremsung)
- 40: unterer Bereich (mit weiteren exemplarischen Komponenten einer Zugbremssteuerung)
- 41: Führerbremsgerät
- 42: Hebel
- 43: Steuerstellung "Schnellbremsung"
- 44: Steuerstellung "Bremsen"
- 45: Steuerstellung "Neutral"
- 46: Steuerstellung "Lösen"
- 47: Steuerstellung "Fahren"
- 48: Steuerstellung "Füllstoß"
- 49, 50: Schaltkontakt
- 51, 52: Schnellbremsleitung
- 53, 54: weiterer Schaltkontakt
- 55-62: Anschlüsse
- 63, 64: Signal-/Betriebsstromleitung
- 65, 66: Bremswirkgruppe
- 67, 68: Entlüftungsventil
- 69: Hauptluftleitung
- 70, 71: elektromagnetische Betätigungselemente
- 72, 73: Pfeile
- 74-77: Schnellbremsleitungsschaltkontakte
- 78, 79: Steuerungsmodul
- 80: Fahrzeugrechner
- 81: Eingangsmodul
- 82: automatische Zugsicherungseinrichtung
- 83, 84: weitere Steuerungsmodule
- 85: weiteres Entlüftungsventil
- 86: Notbremsschlagtaster
- 87: zusätzlicher elektrischer Kontakt
- 90: Bremssteuereinheit
- 91: Eingangsmodul
- 92: Entlüftungsgruppe
- 95: Datenbussystem

## Patentansprüche

1. Führerbremsgerät (11; 41) zum Steuern eines Zugbremssystems, bei dem eine Bremswirkungsanforderung über eine Absenkung eines Drucks in einer Hauptluftleitung (6; 69) durch einen aus mehreren Einheiten (2-5) bestehenden (1) Zug übermittelt wird, umfassend einen Hebel (12; 42), der in mehrere Steuerstellungen (42-48), die eine Schnellbremsstellung (43) umfassen, mechanisch bewegbar ist, wobei ein Bewegen des Hebels (12; 42) in die Schnellbremsstellung (43) eine Entlüftung der Hauptluftleitung (6; 69) bewirkt, um eine Schnellbremswirkung anzufordern,
**dadurch gekennzeichnet, dass**
das Führerbremsgerät (11; 41) als elektromechanischer Steller ausgebildet ist und mindestens zwei voneinander getrennt ausgebildete elektrische Schaltkontakte (20, 21; 49, 50) umfasst, die mit dem Hebel (12; 42) in der Weise gekoppelt sind, dass die mindestens zwei elektrischen Schaltkontakte (20, 21; 49, 50) beim Bewegen des Hebels (12; 42) in die Schnellbremsstellung (43) geöffnet werden.

2. Führerbremsgerät (11; 41) nach Anspruch 1, **dadurch gekennzeichnet, dass** die mindestens zwei Schaltkontakte (20, 21; 49, 50) als zwangsöffnende verschweißungssichere Schaltkontakte ausgebildet sind.

3. Führerbremsgerät (11; 41) nach Anspruch 1 oder 2, **dadurch gekennzeichnet, dass** mit jedem der mindestens zwei elektrischen Schaltkontakte (20, 21; 49, 50) ein elektrischer Schnellbremsleitungsanschluss (56, 58) zum Anschließen jeweils einer von mindestens zwei getrennt ausgebildeten elektrischen Schnellbremsleitungen (22, 23; 51, 52) verbunden ist.

4. Führerbremsgerät (11; 41) nach einem der vorangehenden Ansprüche,
**dadurch gekennzeichnet, dass** ein weiterer oder mehrere weitere elektrische Schaltkontakte (19; 53, 54) mit dem Hebel (12; 42) gekoppelt sind, der oder die beim Bewegen des Hebels (12; 42) in die Schnellbremsstellung (43) seinen oder ihren Schaltzustand ändern.

5. Führerbremsgerät (11; 41) nach einem der vorangehenden Ansprüche, **dadurch gekennzeichnet, dass** der weitere Schaltkontakt (29) oder der weiteren Schaltkontakte (53, 54) als verschweißungssichere zwangsöffnende Schaltkontakte ausgebildet sind.

6. Führerbremsgerät (11; 41) nach einem der vorangehenden Ansprüche, **dadurch gekennzeichnet, dass** die mindestens zwei Schaltkontakte (20, 21; 49, 50) jeweils mit einem weiteren Anschluss (55, 57) verbunden sind, wobei jeder der weiteren Anschlüsse (55, 57) für ein Verbinden mit einer Betriebsspannung vorgesehen ist und wobei jeder der weiteren Anschlüsse (55, 57) jeweils über einen der mindestens zwei Schaltkontakte (20, 21; 49, 50) mit einem der Schnellbremsleitungsanschlüsse (56, 58) verbunden ist.

7. Führerbremsgerät (11; 41) nach einem der vorangehenden Ansprüche, **dadurch gekennzeichnet, dass** die Schnellbremsstellung (43) eine Anschlagstellung ist.

8. Führerbremsgerät (11; 41) nach einem der vorangehenden Ansprüche, **dadurch gekennzeichnet, dass** die Schnellbremsstellung (43) eine rastierte Steuerstellung ist.

## Claims

1. A driver's braking control device (11; 41) for controlling a train braking system, in which a braking effect request is transmitted through a train composed of a plurality of units (2-5) by lowering the pressure in a main air line (6; 69), comprising a lever (12; 42), which can be moved mechanically into a plurality of control positions (42-48) which comprise a rapid brake application position (43), wherein movement of the lever (12; 42) into the rapid brake application position (43) brings about a venting of the main air line (6; 69) in order to request a rapid brake application effect,
**characterised in that**
the driver's braking control device (11; 41) is formed as an electromechanical actuator and comprises at least two electrical switching contacts (20, 21; 49, 50), which are formed separately from one another and which are coupled to the lever (12; 42) in such a way that the at least two electrical switching contacts (20, 21; 49, 50) are opened when the lever (12; 42) moves into the rapid brake application position (43).

2. The driver's braking control device (11; 41) according to claim 1, **characterised in that** the at least two switching contacts (20, 21; 49, 50) are formed as forcibly opening, fusion-proof switching contacts.

3. The driver's braking control device (11; 41) according to claim 1 or 2, **characterised in that** an electrical rapid brake application line connection (56, 58) for connecting one of at least two separately formed electrical rapid brake application lines (22, 23; 51, 52) is connected to each of the at least two electrical switching contacts (20, 21; 49, 50).

4. The driver's braking control device (11; 41) according to any one of the preceding claims, **characterised in that** a further switching contact or plurality of further electrical switching contacts (19; 53, 54) is/are coupled to the lever (12; 42) and changes/change its/their switching state when the lever (12; 42) is moved into the rapid brake application position (43).

5. The driver's braking control device (11; 41) according to any one of the preceding claims, **characterised in that** the further switching contact (29) or the further switching contacts (53, 54) is/are formed as wear-resistant forcibly opening switching contacts.

6. The driver's braking control device (11; 41) according to any one of the preceding claims, **characterised in that** the at least two switching contacts (20, 21; 49, 50) are each connected to a further connection (55, 57), wherein each of the further connections (55, 57) is provided for connection to an operating voltage, and wherein each of the further connections (55, 57) is connected by means of one of the at least two switching contacts (20, 21; 49, 50) to one of the rapid braking application line connections (56, 58).

7. The driver's braking control device (11; 41) according to any one of the preceding claims, **characterised in that** the rapid brake application position (43) is a stop position.

8. The driver's braking control device (11; 41) according to any one of the preceding claims, **characterised in that** the rapid brake application position (43) is a latched control position.

## Revendications

1. Appareil de freinage de conducteur (11 ; 41) pour la commande d'un système de freinage de train, pour lequel une exigence d'action de freinage est transmise par le biais d'un abaissement d'une pression dans une conduite d'air principale (6 ; 69) par un train (1) se composant de plusieurs unités (2-5), comprenant un levier (12 ; 42) qui peut être mobile mécaniquement dans plusieurs positions de commande (42-48) qui comprennent une position de freinage rapide (43), dans lequel un déplacement du levier (12 ; 42) dans la position de freinage rapide (43) provoque une aération de la conduite d'air principale (6 ; 69) afin de demander une action de freinage rapide,
**caractérisé en ce que**
l'appareil de freinage de conducteur (11; 41) est réalisé comme un actionneur électromécanique et comprend au moins deux contacts de commutation électriques (20, 21 ; 49, 50) réalisés séparément l'un de l'autre qui sont couplés au levier (12 ; 42) de telle manière que les au moins deux contacts de commutation électriques (20, 21 ; 49, 50) soient ouverts lors du déplacement du levier (12 ; 42) dans la position de freinage rapide (43).

2. Appareil de freinage de conducteur (11 ; 41) selon la revendication 1, **caractérisé en ce que** les au moins deux contacts de commutation (20, 21 ; 49, 50) sont réalisés comme des contacts de commutation résistants à la soudure à ouverture forcée.

3. Appareil de freinage de conducteur (11 ; 41) selon la revendication 1 ou 2, **caractérisé en ce qu'**à chacun des au moins deux contacts de commutation électriques (20, 21 ; 49, 50) est relié un raccord de conduite de freinage rapide électrique (56, 58) pour le raccordement respectivement d'une des au moins deux conduites de freinage rapide électriques (22, 23 ; 51, 52) réalisées séparément.

4. Appareil de freinage de conducteur (11; 41) selon l'une quelconque des revendications précédentes, **caractérisé en ce qu'**un autre ou plusieurs autres contacts de commutation électriques (19 ; 53, 54) sont couplés au levier (12 ; 42), lequel ou lesquels modifient lors du déplacement du levier (12 ; 42) dans la position de freinage rapide (43) son ou ses états de commutation.

5. Appareil de freinage de conducteur (11 ; 41) selon l'une quelconque des revendications précédentes, **caractérisé en ce que** l'autre contact de commutation (29) ou les autres contacts de commutation (53, 54) sont réalisés comme des contacts de commutation résistants à la soudure à ouverture forcée.

6. Appareil de freinage de conducteur (11; 41) selon l'une quelconque des revendications précédentes, **caractérisé en ce que** les au moins deux contacts de commutation (20, 21 ; 49, 50) sont reliés respectivement à un autre raccord (55, 57), dans lequel chacun des autres raccords (55, 57) est prévu pour une liaison avec une tension de service et dans lequel chacun des autres raccords (55, 57) est relié respectivement par un des au moins deux contacts de commutation (20, 21 ; 49, 50) à un des raccords de conduite de freinage rapide (56, 58).

7. Appareil de freinage de conducteur (11 ; 41) selon l'une quelconque des revendications précédentes, **caractérisé en ce que** la position de freinage rapide (43) est une position de butée.

8. Appareil de freinage de conducteur (11; 41) selon l'une quelconque des revendications précédentes, **caractérisé en ce que** la position de freinage rapide (43) est une position de commande encliquetée.
